(19) Europäisches Patentamt / European Patent Office / Office européen des brevets

(11) **EP 3 381 982 A1**

(12) **EUROPEAN PATENT APPLICATION**
published in accordance with Art. 153(4) EPC

(43) Date of publication:
**03.10.2018 Bulletin 2018/40**

(21) Application number: **16868855.4**

(22) Date of filing: **22.11.2016**

(51) Int Cl.:
*C08L 81/02* (2006.01)   *C08L 23/16* (2006.01)
*C08K 7/14* (2006.01)   *C08K 7/28* (2006.01)
*C08K 3/26* (2006.01)   *B29C 47/08* (2006.01)
*B29C 47/00* (2006.01)   *B29C 47/66* (2006.01)

(86) International application number:
**PCT/KR2016/013488**

(87) International publication number:
**WO 2017/090959 (01.06.2017 Gazette 2017/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.11.2015 KR 20150164288**

(71) Applicant: **SK Chemicals Co., Ltd.**
**Gyeonggi-do 13494 (KR)**

(72) Inventors:
• **LEE, Se-Ho**
**Gwacheon-si**
**Gyeonggi-do 13835 (KR)**
• **KIM, Sung-Gi**
**Yongin-si**
**Gyeonggi-do 16823 (KR)**

(74) Representative: **Modiano, Micaela Nadia et al**
**Modiano & Partners**
**Thierschstrasse 11**
**80538 München (DE)**

(54) **POLYARYLENE SULFIDE RESIN COMPOSITION AND MOLDED PRODUCT**

(57)    The present invention relates to a polyarylene sulfide resin composition which has excellent processability and exhibit excellent physical properties due to its more improved compatibility with other polymer materials or fillers, and a molded article including the same. Such polyarylene sulfide resin composition comprises: a polyarylene sulfide including a disulfide repeating unit in the repeating units of the main chain, wherein at least part of end groups of the main chain is hydroxyl group (-OH); and one or more components selected from the group consisting of a thermoplastic resin, a thermoplastic elastomer and a filler.

**EP 3 381 982 A1**

**Description**

**[TECHNICAL FIELD]**

The present invention relates to a polyarylene sulfide resin composition which exhibit excellent physical properties due to its more improved compatibility with other polymer materials or fillers, and a molded article including the same.

**[BACKGROUND]**

Now, polyarylene sulfide is a typical engineering plastic, and the demand for various products being used in a high temperature and corrosive environment or the electronic prodcuts is increasing due to its high heat resistance and chemical resistance, flame resistance, electric insulation, and so on.

Among the polyarylene sulfides, polyphenylene sulfide is the only one that is commercially available (hereinafter, referred to as "PPS"). The commercial preparation process of PPS being applicable until now involves a solution polymerization of p-dichlorobenzene (pDCB) and sodium sulfide in a polar organic solvent such as N-methylpyrrolidone. This process is known as Macallum process.

However, in the case of the polyarylene sulfide prepared by such Macallum process, a salt type by-product may be generated in the solution polymerization process using sodium sulfide or the like, and thus there is a disadvantage that washing or drying proces is required for eliminating a salt type by-product or a residual organic solvent. Furthermore, since the polyarylene sulfide prepared by the Macallum process has a powder form, the post processing is not easy and the workability may decrease. In addition, the polyarylene sulfide prepared by the Macallum process contains a large amount of an oligomer type polymer chain having a low molecular weight. Thus, when molding a product requiring a high dregree of precision, there is a problem that a considerable amount of flash(burr) is generated and thus a separate process for eliminating thereof is necessary, which causes a deterioration of processability.

Accordingly, a method of melt-polymerizing reactants including a diiodoaromatic compound and an elemental sulfur has been suggested as the method of preparing the polyarylene sulfide such as PPS. The polyarylene sulfide thus prepared does not generate a salt type by-product and also does not require the use of an organic solvent during the preparation process, and thus a separate process for eliminating them is not required. Furthermore, since the polyarylene sulfide prepared finally has a pellet form, there is an advantage that the post processing is easy and the workability is good.

However, in the case of the polyarylene sulfide prepared by the melt-polymerization method, the ends of the main chain are composed of iodine and most aryl groups (typically, benzene). Therefore, there is a disadvantage of that such polyarylene sulfide is inferior in the compatibility with other polymer materials or all sorts of reinforcements or fillers such as glass fibers due to the characteristics of its main chain structure.

Consequently, in the case of the polyarylene sulfide prepared by the melt-polymerization method, it was difficult to compound with other polymer materials or fillers in order to exhibit optimized physical properties which are suitable for different applications, and it was difficult to exhibit necessary optimized physical properties even after compounding. Due to these disadvantages, in the case of previously known polyarylene sulfide resin composition, it was difficult to exhibit sufficient physical properties which are suitable for each application and it is a fact that there was a limit in application to various uses.

In addition, when molding a product that requires a high degree of precision, there is a continuing demand for development of polyarylene sulfide which can further reduce the production amount of flash and exhibit better processability.

**[DETAILS OF THE INVENTION]**

**[OBJECTS OF THE INVENTION]**

It is an aspect of the present invention to provide a polyarylene sulfide resin composition which has excellent processability and exhibit excellent physical properties due to its more improved compatibility with other polymer materials or fillers.

It is another aspect of the present invention to provide a molded article including the polyarylene sulfide resin composition which exhibit optimized physical properties which are suitable for different applications, and a preparation method thereof.

**[TECHNICAL MEANS]**

The present invention provides a polyarylene sulfide resin composition comprising:

a polyarylene sulfide including a disulfide repeating unit in the repeating units of the main chain, wherein at least part of end groups of the main chain is hydroxyl group (-OH); and

one or more components selected from the group consisting of a thermoplastic resin, a thermoplastic elastomer and a filler.

Also, the present invention provides a method for preparing a molded article including the step of extruding the polyarylene sulfide resin composition.

In addition, the present invention provides a molded article including the polyarylene sulfide resin composition.

Hereinafter, the polyarylene sulfide resin composition, the molded article including the same and the preparation method thereof according to specific embodiments of the invention will be described in more detail. However, the embodiments are provided only for an example of the invention, and the scope of the invention is not limited to or by them, and it will be obvious to those skilled in the art that various modifications and variation can be made to the invention without departing from the scope of the invention.

Throughout this specification, unless the context clearly mentions otherwise, the term "include" or "comprise" means to include any components (or ingredients), and it cannot be interpreted as a meaning of excluding the addition of other components (or ingredients).

According to one embodiment of the invention, there is provided a polyarylene sulfide resin composition comprising:

a polyarylene sulfide including a disulfide repeating unit in the repeating units of the main chain, wherein at least part of end groups of the main chain is hydroxyl group (-OH); and

one or more components selected from the group consisting of a thermoplastic resin, a thermoplastic elastomer and a filler.

In such polyarylene sulfide resin composition, the disulfide repeating unit may refer to a polyarylene disulfide repeating unit represented by the following general formula 2 containing a disulfide bond (-S-S- bond) instead of a sulfur bond in the general repeating units of polyarylene sulfide represented by the following general formula 1:

$$\{Ar-S\} \qquad \text{[General Formula 1]}$$

$$\{Ar-S-S\} \qquad \text{[General Formula 2]}$$

in the above formulas 1 and 2, Ar represents a substituted or unsubstituted arylene group.

As described above, as the polyarylene sulfide contained in the resin composition of one embodiment includes a disulfide repeating unit, it is possible to inhibit an oligomer type polymer chain having an excessively low molecular weight from being contained in the polyarylene sulfide in a considerable amount. This is because the molecular weight of the polymer chains contained in the polyarylene sulfide is substantially uniformed while the disulfide bond in the disulfide repeating units continuously causes a sulfur exchange reaction between the polymer chains contained in the polyarylene sulfide. As a result, the polyarylene sulfide contained in the resin composition of one embodiment can include an oligomer-type polymer chain having an excessively low molecular weight in a minimum amount, and the molecular weight distribution of the entire polymer chains becomes uniform so that the molecular weight distribution curve is relatively narrow and it can be derived as a symmetric shape close to the normal distribution curve. Therefore, even when the resin composition of one embodiment containing such polyarylene sulfide is used so as to mold a product requiring a high degree of precision, the production amount of flash can be significantly reduced and more improved processability can be exhibited.

In addition, such disulfide repeating unit may be included in an amount of about 3 wt.% or less, or about 0.01 to 3.0 wt.%, or about 0.1 to 2.0 wt.%, based on the entire polyarylene sulfide. Thereby, the effect of improving the processability due to the disulfide repeating unit may be optimized, and the disulfide repeating unit is excessively increased so that it can inhibit the lowering in the physical properties of the polyarylene sulfide.

On the other hand, in the resin composition of one embodiment, the polyarylene sulfide may be one in which a hydroxy group (-OH) is bonded to at least part of the end groups of the main chain.

The present inventors have found that, in the process of preparing a polyarylene sulfide by melt-polymerizing reactants including a diiodoaromatic compound and an elemental sulfur, it is possible to obtain a polyarylene sulfide which can exhibit better compatibility with other polymer materials or fillers due to the introduction of a specific end group, thereby being compounded with various materials and realizing optimized physical properties suitable for various uses through the compounding.

That is, since the polyarylene sulfide prepared by a conventional melt-polymerization method has the end of the main chain composed of iodine and most aryl groups (typically, benzene), there is substantially no reactive group in the main chain, and thus there is a disadvantage that such polyarylene sulfide is inferior in the compatibility with other polymer materials, all sorts of reinforcements or fillers such as glass fiber.

However, it has been found that in the case of the polyarylene sulfide in which a reactive group such as hydroxy group (-OH) is introduced to at least part of the ends of the main chain of the same, it exhibits excellent compatibility with other polymer materials or fillers due to the presence of the reactive groups. For example, the polyarylene sulfide can exhibit excellent compatibility with polymer materials such as a nylon resin, a polyethylene glycol resin (PEG), a polyethylene oxide resin, a polyethyleneimine resin, a polyvinyl alcohol resin, having a hydrophilic group in a polymer chain, or an ethylene glycidyl methacrylate elastomer having reactivity with a hydroxyl group; or an inorganic material having a hydrophilic group such as glass fiber or talc. It is predicted that this is due to the formation of strong polar or hydrogen bonds between a hydrophilic group or a polar group possessed by the polymer material or the inorganic material, and a hydroxyl group at the end of the polyarylene sulfide. For example, a hydroxyl group in the silanol group of the glass fiber and a hydroxyl group bonded to the end of the main chain of the polyarylene sulfide meet to form a strong hydrogen bond. Alteratively, while an epoxy ring of a polymer material having epoxy functional group such as a glycidyl group (for example, ethylene glycidyl methacrylate elastomer, etc.) is opened, it can be combined with a hydroxy group bonded to the end of the main chain of the polyarylene sulfide, thereby exhibiting a strong binding force.

As a result, in the case of the resin composition of one embodiment including other polymer materials of the thermoplastic resin or the thermoplastic elastomer, or fillers together with the polyarylene sulfide having a hydroxy group at the end of the main chain, the rise in physical properties due to mixing with other materials (for example, compounding) is optimized while exhibiting excellent heat resistance and chemical resistance, and excellent mechanical properties unique to the polyarylene sulfide, thereby providing a molded article which exhibits excellent physical properties suitable for various applications. Therefore, the resin composition of one embodiment enables the polyarylene sulfide resin composition to be applied to various applications.

Ultimately, the resin composition of one embodiment exhibits excellent compatibility between polyarylene sulfide and other materials, while exhibiting excellent processability without scarcely generating flash during molding of a product requiring a high degree of precision, and it can exhibit a better synergistic effect due to the compounding and provide a molded article having physical properties suitable for various applications.

Meanwhile, as the polyarylene sulfide contained in the composition of one embodiment is obtained by melt-polymerizing reactants including a diiodoaromatic compound and an elemental sulfur, it includes iodine bonded to the main chain thereof and free iodine, and the content of iodine bonded to the main chain and free iodine can be about 10 to 10,000 ppmw, or about 10 to 3000 ppmw, or about 50 to 2000 ppmw. The content of iodine bonded to the main chain and free iodine can be measured by a method in which a polyarylene sulfide sample is heat-treated at a high temperature and then quantitated by using ion chromatography, as in the examples described below. In this case, the free iodine may refer collectively to an iodine molecule, an iodide ion, or an iodine radical that is generated in the process of polymerization of the diiodoaromatic compound and the elemental sulfur and remains together in a state of being chemically separated from the finally formed polyarylene sulfide.

Consequently, such polyarylene sulfide solves the problems of the polyarylene sulfide produced by the conventional McCallum process, and it can maintain the advantages of the polyarylene sulfide obtained by the melt-polymerization, for example, maintain advantages such as easy post-processing and excellent mechanical properties without generating by-products. In addition, the polyarylene sulfide can exhibit excellent heat resistance, chemical resistance and mechanical properties mechanical properties unique to the polyarylene sulfide.

Further, the polyarylene sulfide contained in the composition of one embodiment may show a peak in the range of about 3300 to 3600cm$^{-1}$ derived from hydroxy groups of the ends of the main chain in a FT-IR spectrum, when analyzed with FT-IR spectroscopy. At this time, the intensity of the peak in the range of about 3300 to 3600cm$^{-1}$ may correspond to the amount of hydroxy groups bonded to the end group of the main chain.

According to one example, in the FT-IR spectrum of the polyarylene sulfide, if the height of the ring stretch peak shown in the range of about 1400 to 1600cm$^{-1}$ is assumed as the intensity of 100%, the relative height intensity of the peak in the range of about 3300 to 3600cm$^{-1}$ may be about 0.0001 to 10%, or about 0.005 to 7%, or about 0.001 to 4%, or about 0.01 to 3%. At this time, the ring stretch peak shown in the range of 1400 to 1600cm$^{-1}$ may be derived from the arylene group such as phenylene included in the main chain of the polyarylene sulfide. Since the height intensity of the peak in the range of 3300 to 3600cm$^{-1}$ derived from hydroxy groups is about 0.0001 to 10%, or about 0.005 to 7%, or about 0.001 to 4%, or about 0.01 to 3% relative to the height intensity of the peak derived from the arylene group (for example, phenylene group), the polyarylene sulfide can maintain excellent physical properties unique to the polyarylene sulfide while exhibiting excellent compatibility with other polymer materials or fillers, for example, polymer materials or fillers having the characteristics of hydrophilic groups.

Accordingly, the resin composition of one embodiment containing this polyarylene sulfide can exhibit a better synergistic effect due to the compounding of polyarylene sulfide and other polymer materials or fillers.

Meanwhile, the polyarylene sulfide contained in the resin composition of one embodiment may have a melting point of about 265 to 290°C, or about 270 to 285°C, or about 275 to 283°C. Because of such melting point range, the polyarylene sulfide having an introduced hydroxyl group obtained by melt-polymerization method, and the resin composition of one embodiment including this polyarylene sulfide can exhibit excellent heat resistance and flame retardance.

Also, the polyarylene sulfide may have a number average molecular weight of about 5,000 to 50,000, or about 8,000 to 40,000, or about 10,000 to 30,000. And, the polydispersity index defined as the weight average molecular weight divided by the number average molecular weight may be about 2.0 to 4.5, or about 2.0 to 4.0, or about 2.0 to 3.5. Because the polyarylene sulfide has the above-mentioned polydispersity index and molecular weight range, the resin composition of one embodiment including the same can exhibit excellent mechanical properties and processability and can be processed into various molded articles which can be applied to various uses.

Furthermore, the above-mentioned polyarylene sulfide may have a melt viscosity of about 10 to 50,000 poise, or about 100 to 20,000, or about 300 to 10,000, which is measured with a rotating disc viscometer at 300°C. The polyarylene sulfide having such melt viscosity and the resin composition of one embodiment including the same exhibit both superior mechanical properties and excellent processability.

For example, the polyarylene sulfide contained in the resin composition of one embodiment may have a tensile strength of about 100 to 900 kgf/cm$^2$, or about 200 to 800 kgf/cm$^2$, or about 300 to 700 kgf/cm$^2$, which is measured according to ASTM D 638, and an elongation of about 1 to 10%, or about 1 to 8%, or about 1 to 6%, which is measured according to ASTM D 638. Furthermore, the polyarylene sulfide may have a flexural strength of about 100 to 2,000 kgf/cm$^2$, or about 500 to 2,000 kgf/cm$^2$, or about 1,000 to 2,000 kgf/cm$^2$, which is measured according to ASTM D 790, and an impact strength of about 1 to 100J/m, or about 5 to 50 J/m, or about 10 to 20 J/m, which is measured according to ASTM D 256. Like this, the polyarylene sulfide contained in the resin composition of one embodiment can exhibit various physical properties such as excellent mechanical properties, and in addition, it can exhibit excellent compatibility with other polymer materials or fillers. Therefore, the resin composition of one embodiment can exhibit not only a higher synergistic effect due to compounding of the respective components but also excellent physical properties that are suitable for various applications.

Meanwhile, the resin composition of one embodiment may include other polymer materials such as a thermoplastic resin or a thermoplastic elastomer, a filler, etc., in addition to the above-mentioned polyarylene sulfide in which a hydroxyl group is introduced to the end of the main chain. At this time, examples of the polymer material that can be contained in the resin composition of one embodiment include various thermoplastic resins, for example, polyvinyl alcohol-based resins such as polyvinyl alcohol resin, polyether-based resins such as polyethylene glycol resin or polyethylene oxide resin, polyalkylene imine-based resins such as polyethylene imine resin, polyvinyl chloride-based resins, polyamide-based resins such as nylon resin, polyolefin-based resins or polyester-based resins; or various thermoplastic elastomers, for example, polyvinyl chloride-based elastomers, poly(meth)acrylate-based elastomers such as ethylene glycidyl methacrylate elastomer, polyolefin-based elastomers, polyurethane-based elastomers, polyester-based elastomers, polyamide-based elastomers, or polybutadiene-based elastomers, and the like.

Particularly, since the resin composition of one embodiment includes polyarylene sulfide in which hydroxy group is introduced to the end of the main chain, such polyarylene sulfide can exhibit excellent compatibility with polymer materials such as a nylon resin, a polyethylene glycol resin, a polyethylene oxide resin, a polyethyleneimine resin, a polyvinyl alcohol resin, having a hydrophilic group in a polymer chain, or an ethylene glycidyl methacrylate elastomer having reactivity with a hydroxyl group; or an inorganic material having a hydrophilic group such as glass fiber or talc. As described above, this seems to be due to the formation of strong polar or hydrogen bonds between the hydrophilic group or a polar group possessed by the polymer material or the inorganic material, and a hydroxyl group at the end of the polyarylene sulfide. Therefore, these thermoplastic resins or thermoplastic elastomers can be appropriately included in the resin composition of one embodiment, and the polyarylene sulfide in such resin composition can be compounded with these various polymer materials to show excellent synergistic effect, and it becomes possible to achieve optimized properties suitable for various ueses.

In addition, the fillers that can be included in the resin composition may be organic or inorganic fillers in the form of fibers, beads, flakes, or powders, and specific examples thereof include various reinforcements/fillers such as a glass fiber, a carbon fiber, a boron fiber, a glass bead, a glass flake, a talc, a calcium carbonate and the like.

Particularly, since the resin composition of one embodiment includes polyarylene sulfide in which a hydroxy group is introduced to the end of the main chain, the resin composition can appropriately include a filler exhibiting more excellent compatibility with the polyarylene sulfide, for example, a filler such as a glass fiber having a silanol group capable of forming a hydrogen bond with a hydroxy group, and the like. Further, the filler such as a glass fiber or a carbon fiber may be used in a form in which its surface is treated or untreated with a silane coupling agent or the like. However, during the surface treatment with the silane coupling agent, aggregation or compatibility between the filler and the polyarylene sulfide can be further improved.

Since the polyarylene sulfide contained in the resin composition of one embodiment exhibits excellent compatibility with these various polymer materials or fillers, the resin composition of one embodiment can be mixed (for example, compounded) with various other polymer materials or fillers, thereby exhibiting an excellent synergistic effect and also exhibiting optimized properties which are suitable for various applications. However, it is needless to say that, in addition to the above-mentioned polymer materials or fillers, various other polymer materials or reinforcements/fillers may be included in the resin composition of one embodiment to exhibit more excellent physical properties. More specifically, various polymer materials or fillers for further improving the mechanical properties, heat resistance, weather resistance, or moldability of the resin composition can be included in the resin composition of one embodiment without any limitation.

In addition, the resin composition of one embodiment may include about 5 to 95 wt.%, or about 50 to 90 wt.% of the polyarylene sulfide, and 5 to 95 wt. % or about 10 to 50 wt.% of one or more components selected from the group consisting of a thermoplastic resin, a thermoplastic elastomer and a filler. By including the respective components within the above content range, the resin composition of one embodiment can optimize the synergistic effect due to mixing with other components while maintaining excellent physical properties unique to polyarylene sulfide, thereby exhibiting excellent physical properties that can be suitably used for various applications.

Meanwhile, the resin composition of one embodiment may further include additional additives and/or stabilizers in order to further improve its mechanical physical properties, heat resistance, weather resistance, moldability, and the like. Types of these additives and the like are not particularly limited, but examples thereof include an oxidation stabilizer, a light stabilizer (UV stabilizer, etc.), a plasticizer, a lubricant, a nucleating agent, an impact reinforcing material and the like, and two or more additives selected among them can be further included.

Among these additives, a primary or secondary antioxidant can be used as the oxidation stabilizer, and more specific examples thereof include hindered phenol-based, amine-based, sulfur-based or phosphorus-based antioxidants. In addition, the light stabilizer may be included when the resin composition of one embodiment is applied to an exterior material. In particular, a UV stabilizer is typically used, and examples thereof include benzotriazole, benzophenol and the like.

As the lubricant, a hydrocarbon-based lubricant can be typically used as a component for improving the moldability in molding and processing the resin composition of one embodiment. By using such a lubricant, it is possible to prevent friction between the resin composition and the molding metal, or to impart releasability such as detachment in the mold.

In addition, various nucleating agents can be used to improve the crystallization rate in the molding process of the resin composition, thereby improving the solidification rate of the product during extrusion or injection molding, and shortening the cycle time of the product.

Meanwhile, the resin composition of one embodiment may include a melt-polymerized polyarylene sulfide in which a hydroxyl group (-OH) is introduced to the end of the main chain as a main resin component. Such a polyarylene sulfide can be prepared by a method which includes the steps of polymerizing reactants including a diiodoaromatic compound and an elemental sulfur, and further adding an aromatic compound having a hydroxy group, while carrying out the polymerization step. Further, in order to adjust the amount of the disulfide repeating unit contained in the polyarylene sulfide to an appropriate range, for example, a step of further adding 0.01 to 30 parts by weight of elemental sulfur based on 100 parts by weight of the elemental sulfur contained in the reactant while carrying out the polymerization step can be further included.

Hereinafter, a method for preparing such polyarylene sulfide will be described.

In the preparation method of the polyarylene sulfide, the aromatic compound having hydroxyl group may be added thereto when the polymerization reaction between the diiodoaromatic compound and the elemental sulfur is progressed about 90% or more, or about 90% or more and less than 100%, (for example, in the latter part of the polymerization reaction), wherein the degree of progress of the polymerization reaction is determined by the ratio of present viscosity to target viscosity. The degree of polymerization reaction can be determined as the ratio of present viscosity to target viscosity. For this, an objective molecular weight of the polyarylene sulfide to be obtained and a target viscosity of the polymerization product corresponding to the objective molecular weight are set up, and the present viscosity according to the degree of progress of the polymerization reaction is measured. At this time, the method of measuring the present viscosity may be determined by a method well-known to those skilled in the art depending on the scale of reactor. For example, when the polymerization is carried out in a relatively small polymerization reactor, it may be measured by using a viscometer after taking a sample from the reactor where the polymerization reaction is progressing. Alternatively, when the reaction is carried out in a huge continuous polymerization reactor, the present viscosity can be automatically measured continuously in real time with a viscometer installed in the reactor itself.

Like this, in the process of the polymerization reaction of the reactants including the diiodoaromatic compound and elemental sulfur, the melt-polymerized polyarylene sulfide in which hydroxy group is introduced to at least part of end groups of the main chain can be prepared by adding and reacting the aromatic compound having hydroxyl group in the latter part of the polymerization reaction. Particularly, since the compound having hydroxy group is added in the latter part of the polymerization reaction, proper amount of hydroxyl group can be introduced to the end groups of the main chain, and the polyarylene sulfide having excellent physical properties unique to the polyarylene sulfide while exhibiting excellent compatibility with other polymer materials or fillers can be prepared effectively.

Further, in the preparation method of the polyarylene sulfide, a compound in the form of an arbitrary monomer (monomolecule) having hydroxy group may be used as the aromatic compound having hydroxy group. More specific examples of the compound having hydroxy group include 2-iodophenol, 3-iodophenol, 4-iodophenol, 2,2'-dithiodiphenol, 3,3'-dithiodiphenol, 4,4'-dithiodiphenol, and the like. In addition, various aromatic compounds having hydroxyl group can be used.

Furthermore, the aromatic compound having hydroxy group may be added thereto in the amount of about 0.0001 to 10 parts by weight, or about 0.001 to 7 parts by weight, or about 0.01 to 2 parts by weight, based on 100 parts by weight of the diiodoaromatic compound. Proper amount of hydroxyl group can be introduced to the end groups of the main chain by adding such amount of the aromatic compound having hydroxy group, and consequently, the melt-polymerized polyarylene sulfide having excellent properties unique to the polyarylene sulfide while exhibiting excellent compatibility with other polymer materials or fillers can be prepared effectively.

In addition, the above-mentioned polyarylene sulfide is prepared basically by the method of polymerizing the reactants including the diiodoaromatic compound and elemental sulfur, thereby exhibiting excellent mechanical properties and the like compared with those produced by a conventional McCallum process. Such polyarylene sulfide includes iodine bonded to the main chain and residual free iodine as already described above, and the content of iodine bonded to the main chain and free iodine may be about 10 to 10,000 ppmw. The conent of iodine bonded to the main chain and free iodine can be measured by a method in which a polyarylene sulfide sample is heat-treated at a high temperature and quantified by using ion chromatography.

In the preparation process of the polyarylene sulfide, the diiodoaromatic compounds usable in the polymerization reaction include one or more compounds selected from the group consisting of diiodobenzene(DIB), diiodonaphthalene, diiodobiphenyl, diiodobisphenol and diiodobenzophenone, but not limited to or by them, and diiodoaromatic compounds in which alkyl group or sulfone group is bonded as a substituent to the above compounds or an oxygen or nitrogen atom is included in the aromatic group may also be used. Further, the diiodoaromatic compounds may include isomers of various diiodocompounds depending on the position at which the iodine atom is attached. Among them, a compound having iodine at para-position like para-diiodobenzene (pDIB), 2,6-diiodonaphthalene, or p,p'-diiodobiphenyl may be used more preferably.

And, there is no particular limitation on the form of elemental sulfur which reacts with the diiodoaromatic compound. Normally, elemental sulfur exists in a cyclooctasulur (S8) form in which 8 atoms are connected at room temperature. However, if not such form, any commercially available solid or liquid type sulfur may be used without particular limitation.

Further, as described above, in order to adjust the amount of the disulfide repeating unit contained in the above-mentioned polyarylene sulfide to an appropriate range, for example, about 3 wt.% or less, the elemental sulfur may be further added during the polymerization step. The amount of the elemental sulfur to be further added may be appropriately determined by those skilled in the art in consideration of the content of the appropriate disulfide repeating unit, but for example, it can be added in an amount of about 0.01 to 30 parts by weight based on 100 parts by weight of the elemental sulfur contained in the initial reactant. The elemental sulfur which is further added in this way may be added, for example, when the polymerization reaction proceeds by about 50 to 99%, and may be added separately from or together with the above-mentioned aromatic compound having hydroxy group.

Meanwhile, the reactants for preparing the polyarylene sulfide may further include a polymerization initiator, a stabilizer, or a mixture thereof in addition to the diiodoaromatic compound and the elemental sulfur. Specific examples of the polymerization initiator which can be used include one or more initiators selected from the group consisting of 1,3-diiodo-4-nitrobenzene, mercaptobenzothiazole, 2,2'-dithiobenzothiazole, cyclohexylbenzothiazole sulfenamide, and butylbenzothiazole sulfonamide, but are not limited to or by them.

And, the stabilizer is not particularly limited as long as it is a stabilizer usually used in the polymerization reaction of the resin.

Meanwhile, during the polymerization reaction as described above, a polymerization terminator may be added thereto at the time when the polymerization has been carried out to some extent. At this time, any polymerization terminator can be used without particular limitation as long as it can terminate the polymerization by eliminating iodine group included in the polymerized polymer. Specifically, one or more compounds selected from the group consisting of diphenyl disulfide, diphenyl ether, diphenyl, benzophenone, dibenzothiazole disulfide, monoiodoaryl compound, benzothiazoles, benzothiazolesulfenamides, thiurams, dithiocarbamates, and diphenyl disulfide may be used.

More preferably, as the polymerization terminator, one or more compounds selected from the group consisting of iodobiphenyl, iodophenol, iodoaniline, iodobenzophenone, 2-mercaptobenzothiazole, 2,2'-dithiobisbenzothiazole, N-cyclohexylbenzothiazole-2-sulfenamide, 2-morpholinothiobenzothiazole, N,N-dicyclohexylbenzothiazole-2-sulfenamide, tetramethylthiuram monosulfide, tetramethylthiuram disulfide, zinc dimethyldithiocarbamate, zinc diethyldithiocarbamate, and diphenyl disulfide may be used.

Meanwhile, the time of adding the polymerization terminator may be determined in consideration of the molecular weight of the polyarylene sulfide to be finally polymerized. For example, the polymerization terminator may be added at a time when about 70 to 100 wt% of the diiodoaromatic compound contained in the initial reactant are reacted and exhausted.

And, the polymerization reaction may be carried out under any condition as long as it is a condition capable of initiating the polymerization of reactants including a diiodoaromatic compound and an elemental sulfur. For example, the polymerization reaction may be carried out in a temperature-rising and pressure-reducing reaction condition. In this case, the reaction may be carried out for about 1 to 30 hours while varying the temperature and pressure condition from the initial reaction condition of about 180 to 250°C and about 50 to 450 torr to the final reaction condition of about 270 to 350 °C and about 0.001 to 20 torr. As a more specific example, the polymerization reaction may be carried out under the final reaction condition of about 280 to 300°C and 0.1 to 0.5 torr.

Meanwhile, the preparation method of the polyarylene sulfide according to another embodiment may further include the step of melt-mixing reactants including a diiodoaromatic compound and an elemental sulfur before the polymerization reaction. The condition of the melt-mixing is not limited as long as it is a condition capable of melt-mixing all of the above-mentioned reactants, and for example, the process may be carried out at the temperature of about 130 °C to 200 °C, or about 160 °C to 190 °C.

Like this, by carrying out the melt-mixing step before the polymerization reaction, subsequent polymerization reaction can be carried out more easily.

Furthermore, in the preparation method of polyarylene sulfide according to another embodiment, the polymerization reaction may be carried out in the presence of a nitrobenzene-based catalyst. And, when the melt-mixing step is carried out before the polymerization reaction as disclosed above, the catalyst may be added in the melt-mixing step. As the nitrobenzene-based catalyst, 1,3-diiodo-4-nitrobenzene, or 1-iodo-4-nitrobenzene may be used, but it is not limited to or by them.

The melt-polymerized polyarylene sulfide in which hydroxy group or the like is introduced to the end of the main chain can be obtained by the above-mentioned preparation method. Since such polyarylene sulfide exhibits excellent compatibility with other polymer materials or fillers, the resin composition of one embodiment can be obtained by using the polyarylene sulfide.

Meanwhile, according to another embodiment of the invention, there is provided a molded article including the polyarylene sulfide resin composition of the above-mentioned one embodiment and a preparation method thereof. The above molded article can be prepared by a method including a step of extruding the resin composition of one embodiment.

Hereinafter, the molded article and the preparation method thereof will be described in more detail. However, since the kind and content of the components that can be included in the molded article have already been described with respect to the resin composition of one embodiment, an additional specific explanation thereof will be omitted.

The molded article of another embodiment includes one or more components selected from the group consisting of a melt-polymerized polyarylene sulfide in which a hydroxy group or the like is introduced, a thermoplastic resin, a thermoplastic elastomer and a filler, and optionally, other additives. The molded article can be obtained by mixing these components to obtain a resin composition of one embodiment and then extruding the resin composition.

Such molded article may include about 5 to 95 wt.% or about 50 to 90 wt.% of the polyarylene sulfide and about 5 to 95 wt.% or about 10 to 50 wt.% of one or more components selected from the group consisting of a thermoplastic resin, a thermoplastic elastomer, and a filler, and also may include about 2 parts by weight or less, for example, about 0.1 to 2 parts by weight of other additives and the like, based on 100 parts by weight of the total amount of the two components.

For example, an additive such as an oxidation stabilizer or a lubricant may be contained in an amount of about 0.1 to 1 part by weight, and an additive such as a curing agent may be included in an amount of about 0.1 to 2 parts by weight. As the molded article satisfies the above content range, it can exhibit excellent physical properties which can be suitably used for various applications.

Further, when a resin composition containing each of these components is mixed and extruded to produce a molded article, for example, a twin-screw extruder can be used, and the length-to-diameter(L/D) ratio of the twin-screw extruder can be around 30 to 50.

According to one example, first, other additives added in a small amount can be premixed with polyarylene sulfide with a mixer such as a super mixer, and the premixed primary composition can be introduced via a main inlet of the twin-screw extruder. Further, other polymer materials such as a thermoplastic resin or a thermoplastic elastomer, fillers, and the like can be separately introduced via a side feeder located on the side of the extruder. At this time, the position to be introduced on the side may be approximately 1/3 to 1/2 point from the outlet side of the entire barrel of the extruder. By doing so, it is possible to prevent the filler or the like from being broken in the extruder due to rotation and friction by the screw of the extruder.

In this manner, the respective components of the resin composition of one embodiment are mixed and then extruded by a twin-screw extruder to obtain a molded article of other embodiment.

The molded article of still another embodiment may be in various forms such as films, sheets, or fiber. Further, the molded article may be an injection molded article, an extrusion molded article, or a blow molded article. In the injection molding process, the mold temperature may be about 50 °C or more, or about 60 °C or more, or about 80 °C or more in the aspect of crystallization, and the temperature may be about 190 °C or less, or about 170 °C or less, or about 160 °C or less in the aspect of deformation of specimen.

And, if the molded article is formed into a film or a sheet, it may be made into various films or sheets such as undrawn, uniaxially drawn, or biaxially drawn films or sheets. If it is a fiber, it may be made into various fibers such as a undrawn, a drawn, or an ultradrawn fiber, and it may be used as a fabric, a knitted fabric, a nonwoven fabric (spunbond, meltblown, or staple), a rope, or a net.

Such molded articles may be used as electric & electronic parts such as computer parts, architectural elements, car parts, machine parts, daily necessities, coating parts to which chemical materials contact, industrial chemical resistant fiber, and the like.

In the present invention, further details besides the disclosure above may be added and subtracted as needed, and they are not limited particularly in the present invention.


**[EFFECTS OF THE INVENTION]**

The present invention can provide a melt-polymerized polyarylene sulfide having excellent compatibility with other polymer materials or reinforcements/fillers because of hydroxy group included at the end of the main chain.

Such polyarylene sulfide can exhibit excellent properties optimized to various uses and excellent properties unique to the polyarylene sulfide by being compounded with other various polymer materials or fillers.

Therefore, such polyarylene sulfide can be applied to various uses including the use of compounding, and can exhibit excellent properties and effects.


**[DETAILED DESCRIPTION OF THE EMBODIMENT]**

Hereinafter, preferable examples are presented to aid in understanding of the present invention. However, the following examples are only for illustrating the present invention and the present invention is not limited to or by them.


**Example 1: Synthesis of polyarylene sulfide including hydroxy group at the end of the main chain**

The reactants including 5,130g of p-diiodobenzene (p-DIB) and 450g of sulfur was completely melted and mixed in a 5L reactor equipped with a thermocouple capable of measuring the inside temperature of the reactor and a vacuum line for nitrogen purging and vacuumizing by heating the same to 180°C, and then polymerization reaction was progressed by carrying out temperature-rising and pressure reducing step by step from the initial reaction condition of 220 °C and 350 torr to the final reaction temperature of 300°C and the pressure of 1 torr or less, and then further adding sulfur little by little. When the polymerization reaction was progressed 80% (the degree of progress of the polymerization reaction was identified by the relative viscosity ratio according to the formula "(present viscosity/target viscosity)*100%", and the present viscosity was measured with a viscometer after taking a sample from the reactor where the polymerization reaction was progressing), 50g of 2,2'-dithiobisbenzothiazole was added thereto as a polymerization terminator and the reaction was carried out for 1 hour. Subsequently, when the polymerization reaction was progressed 90%, 51g of 4-iodophenol was added thereto and reacted under nitrogen atmosphere for 10 minutes. The reaction was further progressed with slowly vacuumizing to 0.5 torr or less, and terminated when the viscosity reached the target viscosity. Thereby, the polyarylene sulfide resin having hydroxyl group at the end of the main chain was synthesized. The final resin obtained by the reaction was prepared into pellets by using a small strand cutter.

The polyarylene sulfide resin of Example 1 was analyzed by FT-IR spectroscopy. At this time, the presence of the hydroxyl group peak was confirmed in the range of about 3300 to 3600cm$^{-1}$ in the spectrum. It was also confirmed that the relative height intensity of the peak in the range of about 3300 to 3600cm$^{-1}$ was about 0.4% when the height of the ring stretch peak shown in the range of about 1400 to 1600cm$^{-1}$ was assumed as the intensity of 100%.

In addition, the content of iodine bonded to the main chain of the polyarylene sulfide and free iodine was measured by the method described below, and the content thereof was confirmed to be about 1500 ppmw.


**Example 2: Synthesis of polyarylene sulfide including hydroxy group at the end of the main chain**

The reactants including 5,130g of p-diiodobenzene (p-DIB) and 450g of sulfur was completely melted and mixed in a 5L reactor equipped with a thermocouple capable of measuring the inside temperature of the reactor and a vacuum line for nitrogen purging and vacuumizing by heating the same to 180°C, and then polymerization reaction was progressed by carrying out temperature-rising and pressure reducing step by step from the initial reaction condition of 220 °C and 350 torr to the final reaction temperature of 300°C and the pressure of 1 torr or less, and then further adding sulfur little by little. When the polymerization reaction was progressed 80% (the degree of progress of the polymerization reaction was identified by the relative viscosity ratio according to the formula "(present viscosity/target viscosity)*100%", and the present viscosity was measured with a viscometer after taking a sample from the reactor where the polymerization reaction was progressing), 50g of 2,2'-dithiobisbenzothiazole was added thereto as a polymerization terminator and the reaction was carried out for 1 hour. Subsequently, when the polymerization reaction was progressed 90%, 25g of 4-iodophenol was added thereto and reacted under nitrogen atmosphere for 10 minutes. The reaction was further progressed with slowly vacuumizing to 0.5 torr or less, and terminated when the viscosity reached the target viscosity. Thereby, the polyarylene sulfide resin having hydroxyl group at the end of the main chain was synthesized. The final resin obtained by the reaction was prepared into pellets by using a small strand cutter.

The polyarylene sulfide resin of Example 2 was analyzed by FT-IR spectroscopy. At this time, the presence of the hydroxyl group peak was confirmed in the range of about 3300 to 3600cm$^{-1}$ in the spectrum. It was also confirmed that the relative height intensity of the peak in the range of about 3300 to 3600cm$^{-1}$ was about 0.24% when the height of the ring stretch peak shown in the range of about 1400 to 1600cm$^{-1}$ was assumed as the intensity of 100%.

In addition, the content of iodine bonded to the main chain of the polyarylene sulfide and free iodine was measured by the method described below, and the content thereof was confirmed to be about 2000 ppmw.

**Example 3: Synthesis of polyarylene sulfide including hydroxy group at the end of the main chain**

The reactants including 5,130g of p-diiodobenzene (p-DIB) and 450g of sulfur was completely melted and mixed in a 5L reactor equipped with a thermocouple capable of measuring the inside temperature of the reactor and a vacuum line for nitrogen purging and vacuumizing by heating the same to 180°C, and then polymerization reaction was progressed by carrying out temperature-rising and pressure reducing step by step from the initial reaction condition of 220 °C and 350 torr to the final reaction temperature of 300°C and the pressure of 1 torr or less, and then further adding sulfur little by little. When the polymerization reaction was progressed 80% (the degree of progress of the polymerization reaction was identified by the relative viscosity ratio according to the formula "(present viscosity/target viscosity)*100%", and the present viscosity was measured with a viscometer after taking a sample from the reactor where the polymerization reaction was progressing), 50g of 2,2'-dithiobisbenzothiazole was added thereto as a polymerization terminator and the reaction was carried out for 1 hour. Subsequently, when the polymerization reaction was progressed 90%, 51g of 4,4'-dithiodiphenol was added thereto and reacted under nitrogen atmosphere for 10 minutes. The reaction was further progressed with slowly vacuumizing to 0.5 torr or less, and terminated when the viscosity reached the target viscosity. Thereby, the polyarylene sulfide resin having hydroxyl group at the end of the main chain was synthesized. The final resin obtained by the reaction was prepared into pellets by using a small strand cutter.

The polyarylene sulfide resin of Example 3 was analyzed by FT-IR spectroscopy. At this time, the presence of the hydroxyl group peak was confirmed in the range of about 3300 to 3600cm$^{-1}$ in the spectrum. It was also confirmed that the relative height intensity of the peak in the range of about 3300 to 3600cm$^{-1}$ was about 0.62% when the height of the ring stretch peak shown in the range of about 1400 to 1600cm$^{-1}$ was assumed as the intensity of 100%.

In addition, the content of iodine bonded to the main chain of the polyarylene sulfide and free iodine was measured by the method described below, and the content thereof was confirmed to be about 500 ppmw.

**Example 4: Synthesis of polyarylene sulfide including hydroxy group at the end of the main chain**

The reactants including 5,130g of p-diiodobenzene (p-DIB) and 450g of sulfur was completely melted and mixed in a 5L reactor equipped with a thermocouple capable of measuring the inside temperature of the reactor and a vacuum line for nitrogen purging and vacuumizing by heating the same to 180°C, and then polymerization reaction was progressed by carrying out temperature-rising and pressure reducing step by step from the initial reaction condition of 220 °C and 350 torr to the final reaction temperature of 300°C and the pressure of 1 torr or less, and then further adding sulfur little by little. When the polymerization reaction was progressed 80% (the degree of progress of the polymerization reaction was identified by the relative viscosity ratio according to the formula "(present viscosity/target viscosity)*100%", and the present viscosity was measured with a viscometer after taking a sample from the reactor where the polymerization reaction was progressing), 50g of 2,2'-dithiobisbenzothiazole was added thereto as a polymerization terminator and the reaction was carried out for 1 hour. Subsequently, when the polymerization reaction was progressed 90%, 25g of 4,4'-dithiodiphenol was added thereto and reacted under nitrogen atmosphere for 10 minutes. The reaction was further progressed with slowly vacuumizing to 0.5 torr or less, and terminated when the viscosity reached the target viscosity. Thereby, the polyarylene sulfide resin having hydroxyl group at the end of the main chain was synthesized. The final resin obtained by the reaction was prepared into pellets by using a small strand cutter.

The polyarylene sulfide resin of Example 4 was analyzed by FT-IR spectroscopy. At this time, the presence of the hydroxyl group peak was confirmed in the range of about 3300 to 3600cm$^{-1}$ in the spectrum. It was also confirmed that the relative height intensity of the peak in the range of about 3300 to 3600cm$^{-1}$ was about 0.33% when the height of the ring stretch peak shown in the range of about 1400 to 1600cm$^{-1}$ was assumed as the intensity of 100%.

In addition, the content of iodine bonded to the main chain of the polyarylene sulfide and free iodine was measured by the method described below, and the content thereof was confirmed to be about 1200 ppmw.

**Example 5: Synthesis of polyarylene sulfide including hydroxy group at the end of the main chain**

The reactants including 5,130g of p-diiodobenzene (p-DIB) and 450g of sulfur was completely melted and mixed in a 5L reactor equipped with a thermocouple capable of measuring the inside temperature of the reactor and a vacuum line for nitrogen purging and vacuumizing by heating the same to 180°C, and then polymerization reaction was progressed by carrying out temperature-rising and pressure reducing step by step from the initial reaction condition of 220 °C and 350 torr to the final reaction temperature of 300°C and the pressure of 1 torr or less, and then further adding sulfur little by little. When the polymerization reaction was progressed 80% (the degree of progress of the polymerization reaction was identified by the relative viscosity ratio according to the formula "(present viscosity/target viscosity)*100%", and the present viscosity was measured with a viscometer after taking a sample from the reactor where the polymerization reaction was progressing), 30g of diphenyldisulfide was added thereto as a polymerization terminator and the reaction was carried out for 1 hour. Subsequently, when the polymerization reaction was progressed 90%, 25g of 4-iodophenol was added thereto and reacted under nitrogen atmosphere for 10 minutes. The reaction was further progressed with slowly vacuumizing to 0.5 torr or less, and terminated when the viscosity reached the target viscosity. Thereby, the polyarylene sulfide resin having hydroxyl group at the end of the main chain was synthesized. The final resin obtained by the reaction was prepared into pellets by using a small strand cutter.

The polyarylene sulfide resin of Example 5 was analyzed by FT-IR spectroscopy. At this time, the presence of the hydroxyl group peak was confirmed in the range of about 3300 to 3600cm$^{-1}$ in the spectrum. It was also confirmed that the relative height intensity of the peak in the range of about 3300 to 3600cm$^{-1}$ was about 0.27% when the height of the ring stretch peak shown in the range of about 1400 to 1600cm$^{-1}$ was assumed as the intensity of 100%.

In addition, the content of iodine bonded to the main chain of the polyarylene sulfide and free iodine was measured by the method described below, and the content thereof was confirmed to be about 1800 ppmw.

**Example 6: Synthesis of polyarylene sulfide including hydroxy group at the end of the main chain**

The reactants including 5,130g of p-diiodobenzene (p-DIB) and 450g of sulfur was completely melted and mixed in a 5L reactor equipped with a thermocouple capable of measuring the inside temperature of the reactor and a vacuum line for nitrogen purging and vacuumizing by heating the same to 180°C, and then polymerization reaction was progressed by carrying out temperature-rising and pressure reducing step by step from the initial reaction condition of 220 °C and 350 torr to the final reaction temperature of 300°C and the pressure of 1 torr or less, and then further adding sulfur little by little. When the polymerization reaction was progressed 80% (the degree of progress of the polymerization reaction was identified by the relative viscosity ratio according to the formula "(present viscosity/target viscosity)*100%", and the present viscosity was measured with a viscometer after taking a sample from the reactor where the polymerization reaction was progressing), 30g of diphenyldisulfide was added thereto as a polymerization terminator and the reaction was carried out for 1 hour. Subsequently, when the polymerization reaction was progressed 90%, 51g of 4,4'-dithiodiphenol was added thereto and reacted under nitrogen atmosphere for 10 minutes. The reaction was further progressed with slowly vacuumizing to 0.5 torr or less, and terminated when the viscosity reached the target viscosity. Thereby, the polyarylene sulfide resin having hydroxyl group at the end of the main chain was synthesized. The final resin obtained by the reaction was prepared into pellets by using a small strand cutter.

The polyarylene sulfide resin of Example 6 was analyzed by FT-IR spectroscopy. At this time, the presence of the hydroxyl group peak was confirmed in the range of about 3300 to 3600cm$^{-1}$ in the spectrum. It was also confirmed that the relative height intensity of the peak in the range of about 3300 to 3600cm$^{-1}$ was about 0.58% when the height of the ring stretch peak shown in the range of about 1400 to 1600cm$^{-1}$ was assumed as the intensity of 100%.

In addition, the content of iodine bonded to the main chain of the polyarylene sulfide and free iodine was measured by the method described below, and the content thereof was confirmed to be about 600 ppmw.

**Example 7: Synthesis of polyarylene sulfide including hydroxy group at the end of the main chain**

The reactants including 5,130g of p-diiodobenzene (p-DIB) and 450g of sulfur was completely melted and mixed in a 5L reactor equipped with a thermocouple capable of measuring the inside temperature of the reactor and a vacuum line for nitrogen purging and vacuumizing by heating the same to 180°C, and then polymerization reaction was progressed by carrying out temperature-rising and pressure reducing step by step from the initial reaction condition of 220 °C and 350 torr to the final reaction temperature of 300°C and the pressure of 1 torr or less, and then further adding sulfur little by little. When the polymerization reaction was progressed 80% (the degree of progress of the polymerization reaction was identified by the relative viscosity ratio according to the formula "(present viscosity/target viscosity)*100%", and the present viscosity was measured with a viscometer after taking a sample from the reactor where the polymerization reaction was progressing), 35g of diphenyldisulfide was added thereto as a polymerization terminator and the reaction was carried out for 1 hour. Subsequently, when the polymerization reaction was progressed 90%, 25g of 4-iodophenol was added thereto and reacted under nitrogen atmosphere for 10 minutes. The reaction was further progressed with slowly vacuumizing to 0.5 torr or less, and terminated when the viscosity reached the target viscosity. Thereby, the polyarylene sulfide resin having hydroxyl group at the end of the main chain was synthesized. The final resin obtained by the reaction was prepared into pellets by using a small strand cutter.

The polyarylene sulfide resin of Example 7 was analyzed by FT-IR spectroscopy. At this time, the presence of the hydroxyl group peak was confirmed in the range of about 3300 to 3600cm$^{-1}$ in the spectrum. It was also confirmed that the relative height intensity of the peak in the range of about 3300 to 3600cm$^{-1}$ was about 0.29% when the height of the ring stretch peak shown in the range of about 1400 to 1600cm$^{-1}$ was assumed as the intensity of 100%.

In addition, the content of iodine bonded to the main chain of the polyarylene sulfide and free iodine was measured by the method described below, and the content thereof was confirmed to be about 800 ppmw.

## Example 8: Synthesis of polyarylene sulfide including hydroxy group at the end of the main chain

The reactants including 5,130g of p-diiodobenzene (p-DIB) and 450g of sulfur was completely melted and mixed in a 5L reactor equipped with a thermocouple capable of measuring the inside temperature of the reactor and a vacuum line for nitrogen purging and vacuumizing by heating the same to 180°C, and then polymerization reaction was progressed by carrying out temperature-rising and pressure reducing step by step from the initial reaction condition of 220 °C and 350 torr to the final reaction temperature of 300°C and the pressure of 1 torr or less, and then further adding sulfur little by little. When the polymerization reaction was progressed 80% (the degree of progress of the polymerization reaction was identified by the relative viscosity ratio according to the formula "(present viscosity/target viscosity)*100%", and the present viscosity was measured with a viscometer after taking a sample from the reactor where the polymerization reaction was progressing), 35g of diphenyldisulfide was added thereto as a polymerization terminator and the reaction was carried out for 1 hour. Subsequently, when the polymerization reaction was progressed 90%, 13g of 4,4-dithiodiphenol was added thereto and reacted under nitrogen atmosphere for 10 minutes. The reaction was further progressed with slowly vacuumizing to 0.5 torr or less, and terminated when the viscosity reached the target viscosity. Thereby, the polyarylene sulfide resin having hydroxyl group at the end of the main chain was synthesized. The final resin obtained by the reaction was prepared into pellets by using a small strand cutter.

The polyarylene sulfide resin of Example 8 was analyzed by FT-IR spectroscopy. At this time, the presence of the hydroxyl group peak was confirmed in the range of about 3300 to 3600cm$^{-1}$ in the spectrum. It was also confirmed that the relative height intensity of the peak in the range of about 3300 to 3600cm$^{-1}$ was about 0.26% when the height of the ring stretch peak shown in the range of about 1400 to 1600cm$^{-1}$ was assumed as the intensity of 100%.

In addition, the content of iodine bonded to the main chain of the polyarylene sulfide and free iodine was measured by the method described below, and the content thereof was confirmed to be about 700 ppmw.

## Comparative Example 1

The reactants including 5,130g of p-diiodobenzene (p-DIB) and 450g of sulfur was completely melted and mixed in a 5L reactor equipped with a thermocouple capable of measuring the inside temperature of the reactor and a vacuum line for nitrogen purging and vacuumizing by heating the same to 180°C, and then polymerization reaction was progressed by carrying out temperature-rising and pressure reducing step by step from the initial reaction condition of 220 °C and 350 torr to the final reaction temperature of 300°C and the pressure of 1 torr or less, and then further adding sulfur little by little. When the polymerization reaction was progressed 80% (the degree of progress of the polymerization reaction was identified by the relative viscosity ratio according to the formula "(present viscosity/target viscosity)*100%", and the present viscosity was measured with a viscometer after taking a sample from the reactor where the polymerization reaction was progressing), 50g of 2,2'-dithiobisbenzothiazole was added thereto as a polymerization terminator and reacted under nitrogen atmosphere for 10 minutes. The reaction was further progressed with slowly vacuumizing to 0.5 torr or less, and terminated when the viscosity reached the target viscosity. Thereby, the polyarylene sulfide resin having hydroxyl group at the end of the main chain was synthesized. The final resin obtained by the reaction was prepared into pellets by using a small strand cutter.

The polyarylene sulfide resin of Comparative Example 1 was analyzed by FT-IR spectroscopy. As a result, it was confirmed that there was no hydroxyl group peak in the range of about 3300 to 3600cm$^{-1}$ in the spectrum.

In addition, the content of iodine bonded to the main chain of the polyarylene sulfide and free iodine was measured by the method described below, and the content thereof was confirmed to be about 2500 ppmw.

**Comparative Example 2**

Product name Z200 of DIC Co.,Ltd. in which the polyarylene sulfide made by Macallum process was compounded with an elastomer was used as Comparative Example 2.

**Experimental Example** 1: **Evaluation of basic properties of polyarylene sulfide**

The physical properties of polyarylene sulfides of Examples 1 to 8 and Comparative Example 1 were evaluated by the following methods:

Melting point (Tm)

The melting point was measured by using a differential scanning calorimeter (DSC) by elevating the temperature from 30°C to 320°C with a speed of 10°C/min, then cooling the temperature to 30°C, and then again elevating the temperature from 30 °C to 320 °C with a speed of 10 °C/min.

Number average molecular weight (Mn) and Polydispersity index (PDI)

The sample was dissolved in 1-chloronaphthalene with stirring at 250°C for 25 minutes so as to be 0.4wt% solution, and then the polyarylene sulfide having different molecular weights was sequentially separated in the column of a high-temperature gel permeation chromatography (GPC) system (210°C) while flowing the solution with a flow rate of 1 mL/min. The intensity corresponding to the molecular weight of the separated polyarylene sulfide was measured by using a RI detector. After making a calibration line with a standard specimen (polystyrene) of which the molecular weight was known, the relative number average molecular weight (Mn) and polydispersity index (PDI) of the measured sample were calculated.

Melt viscosity (Poise)

The melt viscosity (hereinafter, referred to as 'M.V.') was measured at 300°C by using a rotating disk viscometer. In frequency sweep measuring method, angular frequency was measured from 0.6 to 500 rad/s, and the viscosity at 1.84rad/s was defined as the melt viscosity (M.V.).

Content of iodine bonded to main chain and free iodine (ppmw)

The content of iodine bonded to the main chain and free iodine (ppmw) was determined as follows. The sample was prepared through an automatic pretreatment system (AQF) in which the sample was combusted with a furnace at high temperature and then iodine was ionized and dissolved in distilled water. The content of iodine in the sample was measured by using a calibration curve previously analyzed for the sample via ion chromatography

The physical properties measured according to above methods are listed in Table 1 below:

[Table 1]

| Classification | Melting point(°C) | Number average molecular weight | Polydispersity Index (PDI) | Melt Viscosity (Poise) | Iodine content (ppmw) |
|---|---|---|---|---|---|
| Example 1 | 278.1 | 17,124 | 2.9 | 2,150 | 1500 |
| Example 2 | 278.8 | 17,333 | 2.8 | 2,210 | 2000 |
| Example 3 | 277.5 | 17,225 | 2.9 | 1,960 | 500 |
| Example 4 | 277.8 | 17,457 | 2.8 | 2,010 | 1200 |
| Example 5 | 279.2 | 17,320 | 2.9 | 2,530 | 1800 |
| Example 6 | 278.3 | 17,112 | 2.9 | 2,440 | 600 |
| Example 7 | 279.5 | 17,450 | 2.8 | 2,250 | 800 |
| Example 8 | 279.2 | 17,420 | 2.8 | 2,150 | 700 |

(continued)

| Classification | Melting point(°C) | Number average molecular weight | Polydispersity Index (PDI) | Melt Viscosity (Poise) | Iodine content (ppmw) |
|---|---|---|---|---|---|
| Comparative Example 1 | 280.5 | 17,267 | 2.8 | 2,420 | 2500 |

**Experimental Example 2: Evaluation of mechanical properties of polyarylene sulfide**

The mechanical properties of the polyarylene sulfides of Examples 1 to 8 and Comparative Example 1 were evaluated by the following methods. When measuring each of these physical properties, the specimen was obtained under the following conditions:

Production conditions of test specimen

The test specimen was prepared from 3 kg of polyarylene sulfide) with an injection mold machine (Engel ES75P, mold clamping force of 80 tons, diameter of 25 mm) and the test was carried out according to ASTM D638. In the process, the barrel temperature was set to 270°C/300°C/300°C in order from the feeding inlet, and the nozzle temperature was 300°C, and the mold temperature was 150°C.

Tensile strength and Elongation

The tensile strength and the elongation of the polyarylene sulfide specimens prepared according to Examples 1 to 8 and Comparative Example 1 were measured according to ASTM D 638 method.

Flexural strength and Flexural strength retention ratio

The flexural strengths of the polyarylene sulfide specimens prepared according to Examples 1 to 8 and Comparative Example 1 were measured according to ASTM D 790. Then, after aging the specimen in an oven at 280°C for 100 hours, the flexural strength was again measured and the flexural strength retention ratio was calculated based on the following formula:

$$\text{The flexural strength retention ratio (\%)} = [(\text{flexural strength after aging}) / (\text{flexural strength before aging})] * 100$$

Impact strength (Izod)

The impact strengths of the polyarylene sulfide specimens prepared according to Examples 1 to 8 and Comparative Example 1 were measured according to ASTM D 256.

The mechanical properties measured according to above methods are listed in Table 2 below:

[Table 2]

| Classification | Tensile strength (kgf/cm$^2$) | Elongation (%) | Flexural strength (kgf/cm$^2$) | Impact strength (J/m, Notched) |
|---|---|---|---|---|
| Example 1 | 617 | 1.5 | 1,420 | 18 |
| Example 2 | 608 | 1.4 | 1,415 | 17 |
| Example 3 | 605 | 1.2 | 1,432 | 18 |
| Example 4 | 650 | 1.3 | 1,425 | 17 |
| Example 5 | 602 | 1.4 | 1,433 | 19 |
| Example 6 | 605 | 1.6 | 1,454 | 17 |

(continued)

| Classification | Tensile strength (kgf/cm$^2$) | Elongation (%) | Flexural strength (kgf/cm$^2$) | Impact strength (J/m, Notched) |
|---|---|---|---|---|
| Example 7 | 603 | 1.4 | 1,428 | 21 |
| Example 8 | 615 | 1.3 | 1,477 | 18 |
| Comparative Example 1 | 622 | 1.2 | 1,453 | 19 |

The specimens were prepared by compounding the polyarylene sulfides of Examples 1 to 8 and Comparative Example 1 with other components according to the following methods:

Compounding of polyarylene sulfide and glass fiber

After drying the polymerized resin, the compounding was carried out with a small twin-screw extruder under the condition of the extrusion die temperature of 330°C and the screw speed of 200rpm while adding 40 parts by weight of Glass Fiber 910(made by Owens Corning Co., Ltd.) to 60 parts by weight of the resin.

Compounding of polyarylene sulfide and elastomer

The mixing extrusion was carried out under the condition of the extrusion die temperature of 300°C and the screw speed of 200rpm while adding 10 parts by weight of Lotader (Grade AX-8840, made by Arkema), the elastomer, to 90 parts by weight of the resin.

The mechanical properties of the compounded specimens prepared as above and the specimen of Comparative Example 2 were evaluated in the same manner as in the polyarylene sulfide specimen and are listed in Table 3 below.

[Table 3]

| Classification | Tensile Strength (kgf/cm$^2$) | Elongation (%) | Flexural Strength(kg f/cm$^2$) | Flexural strength retention ratio (%) | Impact strength (J/m, Notched) |
|---|---|---|---|---|---|
| Example 1+ Glass fiber 40% | 1,780 | 1.9 | 2,420 | 87 | 92 |
| Example 2+ Glass fiber 40% | 1,760 | 1.8 | 2,415 | 85 | 90 |
| Example 3+ Glass fiber 40% | 1,770 | 1.9 | 2,410 | 86 | 89 |
| Example 4+ Glass fiber 40% | 1,750 | 1.8 | 2,410 | 85 | 87 |
| Example 5+ Glass fiber 40% | 1,720 | 1.8 | 2,610 | 84 | 90 |
| Example 6+ Glass fiber 40% | 1,700 | 1.7 | 2,530 | 83 | 88 |
| Example 7+ Glass fiber 40% | 1,750 | 1.8 | 2,440 | 85 | 85 |
| Example 8+ Glass fiber 40% | 1,730 | 1.9 | 2,515 | 83 | 87 |
| Comparative Example 1+ Glass fiber 40% | 1,700 | 1.7 | 2,300 | 78 | 77 |
| Comparative Example 2+ Glass fiber 40% | 1,800 | 2.2 | 2,450 | 82 | 110 |

(continued)

| Classification | Tensile Strength (kgf/cm$^2$) | Elongation (%) | Flexural Strength(kg f/cm$^2$) | Flexural strength retention ratio (%) | Impact strength (J/m, Notched) |
|---|---|---|---|---|---|
| Example 1+ Elastomer 10% | 590 | 18.0 | 1,050 | - | 55 |
| Example 2+ Elastomer 10% | 585 | 16.7 | 1,030 | - | 53 |
| Example 3+ Elastomer 10% | 588 | 17.5 | 1,030 | - | 51 |
| Example 4+ Elastomer 10% | 585 | 17.0 | 1,020 | - | 50 |
| Example 5+ Elastomer 10% | 575 | 17.5 | 1,030 | - | 48 |
| Example 6+ Elastomer 10% | 580 | 17.2 | 1,010 | - | 52 |
| Example 7+ Elastomer 10% | 586 | 17.8 | 1,035 | - | 48 |
| Example 8+ Elastomer 10% | 577 | 16.5 | 1,020 | - | 49 |
| Comparative Example 1+ Elastomer 10% | 556 | 2.5 | 950 | - | 17 |
| Comparative Example 2 | 660 | 15.7 | 940 | - | 76 |

According to Tables 2 and 3 above, it was confirmed that, by compounding the polyarylene sulfide of Example 1 of which hydroxy group is introduce to the end of the main chain with glass fiber, the impact strength was greatly elevated from about 18J/m to about 92J/m. Also, it was confirmed that, by compounding the polyarylene sulfide of Example 2 of which hydroxy group is introduced to the end group of the main chain with elastomer, the tensile elongation was greatly elevated from about 1.5% to about 18.0% and the izod strength from about 18 J/m to about 55 J/m. It was confirmed that the improvement in physical properties due to such compounding was equivalent even in other examples.

From the improvement of the physical properties due to such compounding, it was confirmed that the polyarylene sulfides of Examples can exhibit excellent compatibility with other various polymer materials or fillers, and consequently can exhibit excellent synergistic effects.

On the contray, it was confirmed that the polyarylene sulfide of Comparative Example 1 was inferior in the compatibility with other polymer materials or fillers and the synergistic effects caused by compounding was not so big.

**Claims**

1. A polyarylene sulfide resin composition comprising:

   a polyarylene sulfide including a disulfide repeating unit in the repeating units of the main chain, wherein at least part of end groups of the main chain is hydroxyl group (-OH); and
   one or more components selected from the group consisting of a thermoplastic resin, a thermoplastic elastomer and a filler.

2. The polyarylene sulfide resin composition according to Claim 1, wherein the disulfide repeating unit is included in an amount of 3 wt.% or less based on the entire polyarylene sulfide.

3. The polyarylene sulfide resin composition according to Claim 1, wherein the polyarylene sulfide contains iodine bonded to the main chain and free iodine, and the content of the iodine bonded to the main chain and free iodine is 10 to 10,000 ppmw.

4. The polyarylene sulfide resin composition according to Claim 1, showing a peak in the range of 3300 to 3600cm$^{-1}$, in a FT-IR spectrum.

5. The polyarylene sulfide resin composition according to Claim 4, wherein the relative height intensity of the peak in the range of 3300 to 3600cm$^{-1}$ is 0.01 to 3%, when the height of the ring stretch peak shown in the range of 1400 to 1600cm$^{-1}$ was assumed as the intensity of 100%, in the FT-IR spectrum of the polyarylene sulfide.

6. The polyarylene sulfide resin composition according to Claim 1, wherein the thermoplastic resin is one or more selected from the group consisting of polyvinyl alcohol-based resin, polyether-based resin, polyalkylene imine-based resins, polyvinyl chloride-based resin, polyamide-based resin, polyolefin-based resin, and polyester-based resin.

7. The polyarylene sulfide resin composition according to Claim 1, wherein the thermoplastic elastomer is one or more selected from the group consisting of polyvinyl chloride-based elastomer, poly(meth)acrylate-based elastomer, polyolefin-based elastomer, polyurethane-based elastomer, polyester-based elastomer, polyamide-based elastomer, and polybutadiene-based elastomer.

8. The polyarylene sulfide resin composition according to Claim 1, wherein the filler is an organic or inorganic filler in the form of fibers, beads, flakes, or powders.

9. The polyarylene sulfide resin composition according to Claim 1, wherein the filler is one or more selected from the group consisting of a glass fiber, a carbon fiber, a boron fiber, a glass bead, a glass flake, a talc and a calcium carbonate.

10. The polyarylene sulfide resin composition according to Claim 1, wherein the polyarylene sulfide has a number average molecular weight of 5,000 to 50,000.

11. The polyarylene sulfide resin composition according to Claim 1, which includes 5 to 95 wt.% of polyarylene sulfide, and 5 to 95 wt.% of one or more component selected from the group consisting of the thermoplastic resin, the thermoplastic elastomer and the filler.

12. The polyarylene sulfide resin composition according to Claim 1, further comprising one or more additives selected from the group consisting of an oxidation stabilizer, a light stabilizer, a plasticizer, a lubricant, a nucleating agent, and an impact reinforcing material.

13. A method for preparing a molded article comprising the step of extruding the polyarylene sulfide resin composition according to any one of claims 1 to 12.

14. The method for preparing a molded article according to claim 13, wherein the extrusion is carried out with a twin-screw extruder.

15. A molded article including the polyarylene sulfide resin composition according to any one of claims 1 to 12.

16. The molded article according to claim 15, which is in the form of film, sheet, or fiber.

17. The molded article according to claim 15 for use as a car interior part, a car exterior part, an electric part, an electronic part, or industrial material.

## INTERNATIONAL SEARCH REPORT

International application No.

PCT/KR2016/013488

### A. CLASSIFICATION OF SUBJECT MATTER

*C08L 81/02(2006.01)i, C08L 23/16(2006.01)i, C08K 7/14(2006.01)i, C08K 7/28(2006.01)i, C08K 3/26(2006.01)i, B29C 47/08(2006.01)i, B29C 47/00(2006.01)i, B29C 47/66(2006.01)i*

According to International Patent Classification (IPC) or to both national classification and IPC

### B. FIELDS SEARCHED

Minimum documentation searched (classification system followed by classification symbols)

C08L 81/02; C08G 75/02; C08K 7/06; C08L 101/00; C08G 75/14; C08L 23/16; C08K 7/14; C08K 7/28; C08K 3/26; B29C 47/08; B29C 47/00; B29C 47/66

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: polyarylene sulfide, disulfide, hydroxy group, commercialization

### C. DOCUMENTS CONSIDERED TO BE RELEVANT

| Category* | Citation of document, with indication, where appropriate, of the relevant passages | Relevant to claim No. |
|---|---|---|
| Y | KR 10-2014-0037776 A (SK CHEMICALS CO., LTD.) 27 March 2014<br>See paragraphs [0032], [0035]; and claims 1-2, 4, 7-18. | 1-17 |
| Y | KR 10-2006-0074919 A (DAINIPPON INK AND CHEMICALS, INC.) 03 July 2006<br>See abstract; paragraph [0012]; claim 1; and example 1. | 1-17 |
| A | US 2013-0273280 A1 (TICONA LLC.) 17 October 2013<br>See paragraphs [0051], [0064], [0066], [0068], [0092], [0114]; and claims 1, 5, 8-9, 11, 13. | 1-17 |
| A | US 4786713 A (RULE, Mark et al.) 22 November 1988<br>See abstract; column 2, lines 43-56; column 3, line 67-column 4, line 2; and example 1. | 1-17 |
| A | KR 10-2015-0085087 A (DIC CORPORATION) 22 July 2015<br>See abstract; and claims 1-2, 6-7. | 1-17 |

☐ Further documents are listed in the continuation of Box C.　　☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 28 FEBRUARY 2017 (28.02.2017) | **28 FEBRUARY 2017 (28.02.2017)** |

| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |
|---|---|

Form PCT/ISA/210 (second sheet) (January 2015)

INTERNATIONAL SEARCH REPORT
Information on patent family members

International application No.

**PCT/KR2016/013488**

| Patent document cited in search report | Publication date | Patent family member | Publication date |
|---|---|---|---|
| KR 10-2014-0037776 A | 27/03/2014 | CN 104640929 A | 20/05/2015 |
| | | EP 2899234 A1 | 29/07/2015 |
| | | EP 2899234 A4 | 22/06/2016 |
| | | HK 1207875 A1 | 12/02/2016 |
| | | JP 2015-528525 A | 28/09/2015 |
| | | TW 201418365 A | 16/05/2014 |
| | | US 2015-0218376 A1 | 06/08/2015 |
| | | WO 2014-046483 A1 | 27/03/2014 |
| KR 10-2006-0074919 A | 03/07/2006 | EP 0900817 A2 | 10/03/1999 |
| | | EP 0900817 A3 | 03/01/2001 |
| | | EP 0900817 B1 | 22/03/2006 |
| | | JP 11-080356 A | 26/03/1999 |
| | | JP 11-286548 A | 19/10/1999 |
| | | JP 3838296 B2 | 25/10/2006 |
| | | JP 3897140 B2 | 22/03/2007 |
| | | KR 10-0610474 B1 | 24/10/2006 |
| | | KR 10-0674758 B1 | 25/01/2007 |
| | | US 6001934 A | 14/12/1999 |
| US 2013-0273280 A1 | 17/10/2013 | JP 2015-519423 A | 09/07/2015 |
| | | US 9394430 B2 | 19/07/2016 |
| | | WO 2013-155407 A1 | 17/10/2013 |
| US 4786713 A | 22/11/1988 | CN 1014607 B | 06/11/1991 |
| | | CN 1032663 A | 03/05/1989 |
| | | CN 1032942 A | 17/05/1989 |
| | | EP 0316078 A2 | 17/05/1989 |
| | | EP 0316078 B1 | 23/12/1992 |
| | | EP 0383826 A1 | 29/08/1990 |
| | | EP 0383826 B1 | 20/01/1993 |
| | | KR 10-1989-0701663 A | 21/12/1989 |
| | | WO 89-03850 A1 | 05/05/1989 |
| KR 10-2015-0085087 A | 22/07/2015 | CN 105051092 A | 11/11/2015 |
| | | EP 2980121 A1 | 03/02/2016 |
| | | EP 2980121 A4 | 17/08/2016 |
| | | JP 5708898 B2 | 30/04/2015 |
| | | US 2016-0060397 A1 | 03/03/2016 |
| | | WO 2014-156946 A1 | 02/10/2014 |

Form PCT/ISA/210 (patent family annex) (January 2015)